# EUROPEAN PATENT APPLICATION

(11) **EP 2 770 700 A1**
(43) Date of publication of application: **27.08.2014**
(21) Application number: 13305187.0
(22) Date of filing: 20.02.2013
(51) Int. Cl.: H04L 29/12

(54) **DNS request**

(71) Applicant: ALCATEL LUCENT, 92100 Boulogne-Billancourt (FR)
(72) Inventor: Moreels, Johan, 1760 Roosdaal (BE); Janssens, Nico, 2580 Putte (BE)
(74) Representative: D'Halleweyn, Nele Veerle Trees Gertrudis

(57) **Abstract**

Server device connectable to an IP network, the device comprising a DNS repository and a processing unit capable of performing a searching operation in the repository based on a search request comprising a column and a corresponding key, wherein the processing unit is provided for extracting a further column and a further corresponding key from the search request, and for performing the searching operation in two stages, a first stage with the column and key and a second stage with the further column and further key

## Description

### Technical Field

The present invention relates to DNS searching and particularly to extend DNS requests.

### Background

DNS is a distributed key-value data store that is mainly used to translate names to IP addresses and the reverse. A DNS key-value data store can be regarded as a database having at least two columns, one with the keys, the other with the corresponding values. Optionally the DNS database comprises further columns, for example defining the record type. The presence of yet further columns depends on the record type, e.g. port number in SRV DNS records. Although the DNS data might be stored as text (without an explicitly defined column and row structure), the data can still be considered as a database. Therefore in the context of this description, the term column is defined as referring to the list of DNS names or the list of record types contained in a particular DNS store, while the term 'corresponding key' is defined as the searching condition that is searched in the specified column. Other data items in a DNS store can also be ordered in columns but the standard DNS infrastructure does not allow using these as searching parameters.

DNS can also be used to register application services and can play a role in M2M, IMS and cloud related registrations. There are a number of arguments that encourage the use of DNS for these functions.

DNS is currently the only worldwide deployed distributed database with massive client, server and infrastructure support. In fact almost all IP based network nodes have support for DNS. It is an essential ingredient in the working of the world-wide-web. So its infrastructure is actively supported and its strengths and weaknesses are well understood. This makes use of DNS infrastructure for other functions, such as universal discovery of devices and services, meta-data storage related applications, very interesting.

The extended functionality can be supported by DNS using the existing additional record types: SRV (RFC 2782), TXT (RFC 1035), PTR (RFC 1035), NAPTR (RFC 3403) records.

A certain service can be described by some DNS key and result in many records with this key in the DNS database. In addition multiple DNS queries could be needed in succession to finally get to the required information.

As an example the registration of a HTTP based service using DNS-SD (draft-cheshire-dnsext-dns-sd-11) is described hereafter. The key identifying the service is: example_service._http._tcp.organisation.org

The different instances implementing the service are registered using SRV records:
example_service._http._tcp.organisation.org SRV 0 0 80 instance001.organisation.org
example_service._http._tcp.organisation.org SRV 0 0 80 instance002.organisation.org
example_service._http._tcp.organisation.org SRV 0 0 80 instance001.organisation.com
example_service._http._tcp.organisation.org SRV 0 0 80 instance001.eu.organisation.com
example_service._http._tcp.organisation.org SRV 0 0 80 instance001.us.organisation.com
**...**

| | |
|---|---|
| Meta-data about the service can be defined in records as in the example below: | TXT |
| example_service._http._tcp.organisation.org "path=/path/to/the/example/service.php" | TXT |
| example_service._http._tcp.organisation.org "version=1.1 instances=instance001.organisation.org" | TXT |
| example_service._http._tcp.organisation.org "version=1.2 | TXT |
| instances=instance002.organisation.org,instance001.organisation.com" | TXT |
| example_service._http._tcp.organisation.org "default_version=1.3" | TXT |
| example_service._http._tcp.organisation.org "method=post" | TXT |
| example_service._http._tcp.organisation.org "returns=status" | TXT |
| example_service._http._tcp.organisation.org "tags=shop, food, exotic" | TXT |
| ... | |

In order to find all HTTP services in a domain, DNS-SD uses PTR records:

| | |
|---|---|
| _http._tcp.organisation.org example_service._http._tcp.organisation.org | PTR |
| _http._tcp.organisation.org example_service_a._http._tcp.organisation.org | PTR |
| _http._tcp.organisation.org example_service_b._http._tcp.organisation.org | PTR |
| _http._tcp.organisation.org main_web_page._http._tcp.organisation.org | PTR |
| ... | |

Standard DNS queries lookup data by providing the key of the requested data and the DNS server returns all the records that are associated with this key. As indicated by the example, service, M2M, IMS and/or cloud related registrations could yield many records that are registered with the same key.

Using the current query mechanism a DNS client needs to retrieve all records corresponding to a certain key and apply the additional selection criteria on the returned result set. Thereby, several DNS queries in succession could be needed to finally get to the wanted information.

Continuing with the example given before, a client could look for a service that implements a shop selling exotic food. It is clear that when using the classical query possibilities of DNS, multiple queries are needed. First a list of all the services needs to be retrieved. Then the meta-data of each encountered service needs to be retrieved and analysed for the wanted tags. In a next step, the service instances need to be retrieved, and from these results the client can chose the instance that is most appropriate for providing the wanted service.

In the future, it is likely that additional functions could be performed by DNS. However when the amount of records scales out incrementally, there is a need for more advanced DNS server capabilities.

It is an object of the invention to propose an apparatus and method for more advanced DNS usage.

### Summary

The invention proposes a client device connectable to an IP network, the device comprising a DNS request builder comprising a main segment and an auxiliary segment, the main segment being provided for composing a DNS search request comprising a column and a corresponding key, the auxiliary segment being provided for adding to said composed search request a further column key and a further corresponding value key as auxiliary searching information.

Setting up a service/resource discovery has been attempted by many. However most of them need the use of dedicated infrastructure both at the server and client side. DNS is currently the most successful mechanism used for discovering the IP addresses of machines. Almost all networkable machines have support for DNS build in. It is a well proven distributed, scalable high-performance information store. Extending this infrastructure with an efficient query mechanism will allow it to thrive in other fields beyond merely IP address lookup.

By providing a column and corresponding key and a further column and a further corresponding key, a multi-step DNS lookup can be done in a single request. Such multi-step DNS lookup creates abundant use possibilities. It avoids the server sending a long list of DNS results in which the client searches for a further match. Thereby, an efficient query mechanism is integrated into DNS.

Preferably, the client device comprises a communication module connectable to the IP network, which module is provided for sending the composed DNS request and for receiving a response to said request from a server.

The invention further relates to a server device connectable to an IP network, the device comprising a DNS repository and a processing unit capable of performing a searching operation in the repository based on a search request comprising a column and a corresponding key, wherein the processing unit is provided for extracting a further column and a further corresponding key from the search request, and for performing the searching operation in two stages, a first stage with the column and key and a second stage with the further column and further key.

Preferably, the server comprises a database being caching means provided for storing the results of the first stage of the searching operation executed on the DNS repository, which database is used as an input for performing the second stage of the searching operation.

Preferably, the server device comprises a communication module connectable to the IP network, which module is provided for receiving the search request from a client and which is provided for sending a response to the client.

The invention further relates to a method for handling a DNS search request from a client, the method comprising:
- Receiving from a client a DNS search request;
- Extracting a column and corresponding key from the DNS search request;
- Extracting a further column key and further corresponding value key from the DNS search request;
- Searching a DNS repository in two stages, a first stage using the column and corresponding key and a second stage using the further column and further corresponding key; and
- Sending results of the searching to said client.

The invention adds additional selection criteria or conditions to a DNS query (being the further column and further corresponding key). The purpose of these criteria is to reduce the number of DNS records returned to the requestor (the client) and/or reduce the number of recursive queries needed to obtain the wanted information.

Preferably, said searching in two stages comprises:
- Searching the DNS repository using the column and corresponding key and storing results in a database; and
- Searching the database using the further column and further corresponding key to obtain search results.

### Brief description of the figures

Some embodiments of apparatus and/or methods in accordance with embodiments of the present invention are now described, by way of example only, and with reference to the accompanying drawings, in which:
figure 1 illustrates a client device and a server device according to an embodiment of the invention; and
figure 2 illustrates a succession of method steps according to an embodiment of the invention.

### Detailed description of embodiments

The naming system of DNS is organized as a hierarchical tree of domain names. Each domain prepends its name to the parent domain and the different levels are separated by a dot ("."). For example: "alcatel-lucent.com" is the name of the "alcatel-lucent" domain with "com" as a parent domain. Nodes belonging to a domain, prepend their name to the domain name. For example www.alcatel-lucent.com is the name of the web server of the "alcatel-lucent.com" domain. All records of a DNS domain are stored as key-value pairs with a number of DNS related qualifiers. All data associated with a node can be found using the node name as a key. The different DNS record types define the data type of the value of that record.

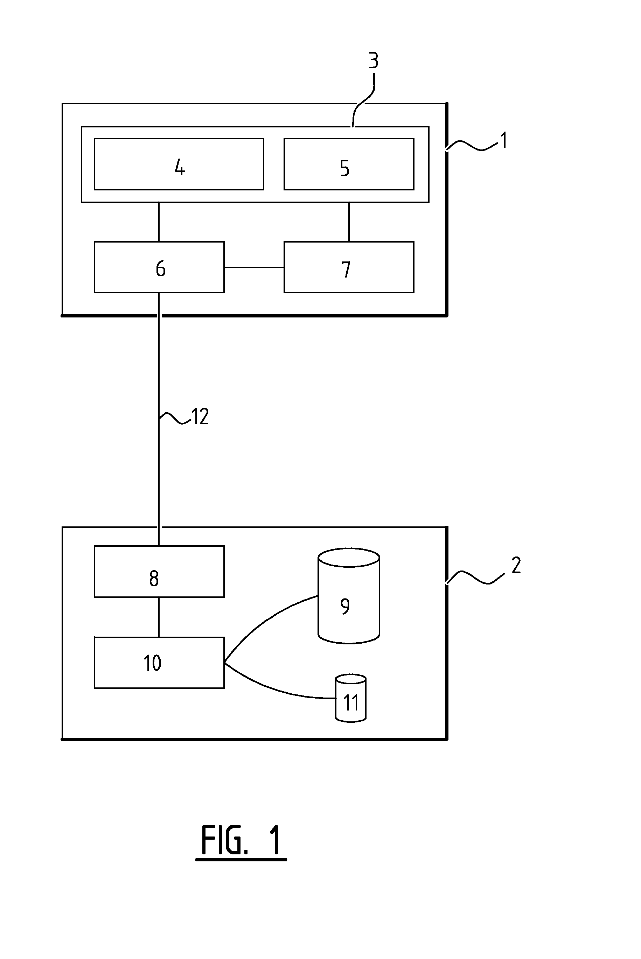

Figure 1 shows an example of a client device 1 which is provided to communicate, via an internet connection 12, with a server device 2. For establishing the connection 12, the client device comprises a communication module 6. The communication module 6 is connected to a processing module 7 provided for processing incoming and/or outgoing communication messages. The client device 1 further comprises a DNS request builder 3. The DNS request builder comprises a first segment 4 and a second segment 5. The first segment 4 is configured to compose the DNS request based on a column and a corresponding key. The second segment 5 is configured to add a further column and further corresponding key to the DNS request composed by the first segment 4. Thereby, the DNS request builder 3 transmits to the communication module 6 an extended DNS request comprising a column, corresponding key, further column and further corresponding key. Such extended DNS request allows a server to execute a multi-stage DNS search in the DNS repository 9. It will be clear that DNS requests comprising yet further searching information (for example a third column and third corresponding key) also falls within the scope of the present invention.

The server device 2 comprises a communication module 8 provided for receiving DNS request messages from clients and for sending corresponding results to these clients. The server device 2 comprises a DNS repository 9 which is searchable via a processing module 10. The server device 2 comprises, according to a preferred embodiment, a database in which results from a first stage of a DNS search can be temporarily stored, upon which database the second stage of the DNS search can be performed. In this manner, a two-stage DNS search can be performed by the server device 2, based on a DNS search request comprising a column and corresponding key (for the first stage) and a further column and further corresponding key (for the second stage).

In the basic configuration of most IP nodes, a limited set of DNS server addresses is configured, either manually or by the mechanism providing an IP address to that node (DHCP, PPP, ...).

When an IP node tries to find the data associated with the name of a remote node, it builds a DNS request via the request builder 3 and sends the request via the communication module 6 to a predetermined DNS address given during the configuration. In many cases, the wanted information is not known by the contacted DNS server and it needs to forward this request to another DNS server that either is known to serve the domain of the wanted node or either is closer to the domain of the wanted node or is higher in the DNS tree. This process ripples through the hierarchical tree until the domain is found where the records of that node are stored and the information can be given to the original requestor.

For performance and scalability reasons, each retrieved record is cached at different levels of the DNS tree. Most nodes also implement such a cache locally. In order to limit the caching of stale data, each DNS record has an associated TTL (time-to-live) parameter which allows to remove aged cache entries.

In prior art DNS systems, all records associated with a DNS key are returned as a result of a DNS query. The only additional selection criterion that can be specified is the DNS record type. If additional selection criteria are needed on the result set, they need to be applied by the client. So in prior art DNS systems, client and network resources are consumed for data that one is not interested in.

There are currently 2 types of DNS implementations: static and dynamic DNS.

In a static DNS server the data is maintained with non-DNS based tools (e.g. text editor) and a restart of the DNS server, or an external trigger that forces the DNS server to reload the updated configuration is needed to make the changes visible to the DNS clients. This type of servers is mostly used when the data is quasi static.

In a dynamic DNS server the data can be altered in real-time. This type of DNS server is commonly used with IP nodes that do not have a fixed IP address. For example many DHCP implementations interface with a dynamic DNS server to keep the node name and IP address synchronized. RFC 2136 defines an interface that allows life updates of DNS data.

In a static server the so-called "time to live" (hereafter TTL) is typically a day and the result of a query can be stored in cache for a rather long time. In such a situation the invention contributes to simplifying the lookup logic in the client performing the query.

The present invention provides even more advantageous effects for a dynamic DNS server. The stored data is transient and as a consequence the efficiency of caching the result of a query is minimal. In this case the invention will increase the performance of the queries.

DNS provides a standard extension mechanism, EDNSO (RFC2671), that allows adding optional data to a DNS request. For example EDNSO is an essential part of DNSSEC, the secure DNS implementation. The invention can, according to one example, be implemented by using this existing mechanism to provide additional query criteria (the further column and further corresponding key) to the DNS server. A DNS server implementing the proposed extension uses this information (further column and further corresponding key) to restrict the result set returned to the DNS requester and return only those records that satisfy the additional selection criteria. In this manner, a server can execute a multiple-stage DNS lookup.

The EDNSO mechanism also allows the DNS client to probe whether a DNS server implements support for the additional selection criteria. Thereby preferably the DNS server, authoritative for the domain that is queried, is provided to support this extension. If this is not the case, the wanted information can still be retrieved using a regular DNS query. In the latter case, it is the client that performs the second stage of the lookup based on the results received from the server regarding the first stage of the search.

Preferably, the further key and further corresponding value is provided as a piece of query language (e.g. SQL, SparQL, ..) in the OPTION-DATA field of the DNS OPT record. In order to identify this OPT record as containing a query, it is preferred to request an OPTION-CODE at IANA (internet assigned numbers authority) for this purpose.

The EDNSO mechanism adds an OPT resource record (RR) to the DNS request. The format is given below:

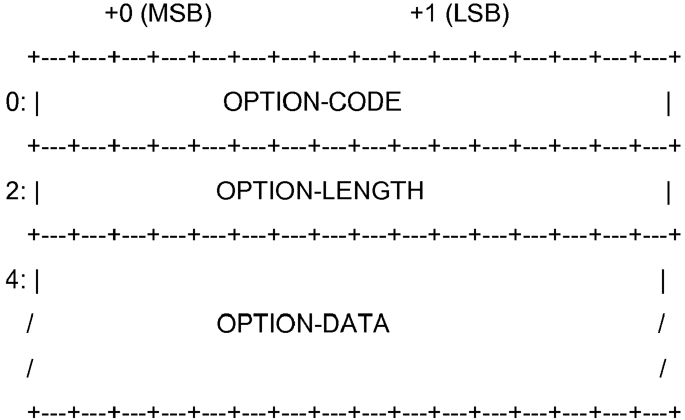

Thereby:
OPTION-CODE (Assigned by IANA.)
OPTION-LENGTH Size (in octets) of OPTION-DATA.
OPTION-DATA Varies per OPTION-CODE.

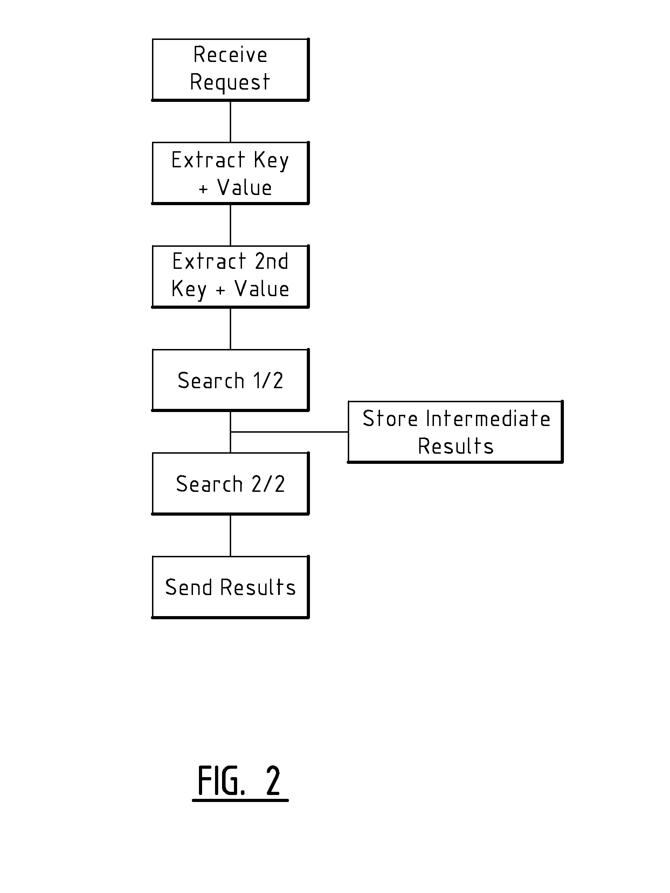

Figure 2 shows a sequence of method steps according to the invention. These method steps are executed by a server to perform a multi-stage DNS lookup. The method starts with the step of receiving the DNS request. The DNS request is received from a client and comprises a column and corresponding key and further comprises a further column and further corresponding key, for example included in the EDNSO mechanism.

In a second step, the column and corresponding key is extracted from the DNS request. In a third step, the further column and further corresponding key is also extracted from the DNS request.

In a fourth step, the first stage of the search is executed. In this step, the DNS repository 9 is searched based on the column and corresponding key, to find corresponding results. In an example of the invention, these corresponding results are saved in a database 11 as intermediate results.

In a fifth step, the second stage of the search is executed. In the above-described example of the invention, the intermediate results saved in the database 11 are used as an input for the second stage of the search. Thereby, the further column and further corresponding key are used as a basis for the second stage of the search.

The results of the search (first and second stage) are in a last step sent to the requester (which is the client from which the DNS request has been received). These results are preferably sent in the format as a conventional DNS server response, for backward compatibility reasons.

It will be clear that the third and fourth step could be switched so that the further column and further corresponding key is extracted only after the first stage of the searching has been executed.

A further (not restrictive) embodiment is given hereunder as an example in which one could model the DNS record types as relational database tables.

Each DNS record type could be seen as a table. For example:
* the SRV table could have the following columns:
   key, ttl, class, priority, weight, port, target
* the A table: key, ttl, class, address
* the PTR table: key, ttl, class, reference
* the TXT table: key, ttl, class, text

Using this mapping one can formulate the following query (still using the example depicted previously):
SELECT a.address, s.port FROM SRV s, PTR p, A a, TXT t WHERE p.key ='_http._tcp.organisation.org' AND t.key=p.reference AND s.key=p.reference AND a.key=s.target AND t.text LIKE '%exotic%' AND t.text LIKE '%food%';

This query is added using the EDNSO mechanism and thus comprises (at least) the further column and further key. In the example, as is possible in general, the EDNSO extension comprises a complete query including the column and corresponding key and the further column and further corresponding key. Thereby, the query could be used by a server supporting this EDNSO mechanism instead of the regular DNS lookup request. This query would select all IP addresses and TCP ports from the registrations of HTTP services of "organization.org" that contain the words "exotic" and "food" in their description.

The query results in a standard DNS query response and as such returns a set of standard DNS RR. In this example, only SRV and A records that match the selection criteria would be returned.

The following text describes a number of areas where the application of the method described in this document will be beneficial.

DNS NAPTR [rfc 2915] and SRV [rfc 2782] records are commonly used to register and query SIP-servers. When this is the case, according to the prior art, routing a call to a SIP-server involves three steps. The first step is looking up the available NAPTR records to map the client's SIP domain onto the available resources. As a result, the client receives a set of records, each containing a service name, a set of flags, a regular expression rule, an order value, a preference and a replacement.

In a second step, the client queries the DNS server to fetch the associated SRV records for every useful NAPTR replacement (the client searches in the records received in the first step which records are useful). As a result, the client receives a set of records each containing, among others, a symbolic name of the desired service, its transport protocol, the priority of the target host, a relative weight and a canonical hostname for the affected SIP-server.

In a third step, after selecting the most appropriate SIP-server (the client selects the server based on the results received from the second step), the client queries for an A or AAAA record translating the canonical hostname into the SIP-server's IP address. The call can now be routed to the SIP-server.

When applying the present invention, the SIP client first specifies the different query conditions are to be met. These may include, for instance, the NAPTR service name and the minimal weight of the SRV record. The client then sends a single request to the DNS server, and receives only those A or AAAA records that meet the specified conditions. Hence, avoiding the consumption of unnecessary bandwidth. In other words, the search request from the present invention can comprise a column and key (first searching step) and a further column and further corresponding key (second searching step). The server is adapted according to the invention to be able to correctly handle these first and second searching steps.

As indicated in the example given before, the invention is very useful when used with service discovery as defined in DNS-SD (DNS Service Discovery, draft-cheshire-dnsext-dns-sd-11.txt). In DNS-SD one uses PTR records to associate a service type with a service names. Each service instance, deploying a named service, is identified by a combination of SRV and TXT records. As in the example a service that uses the HTTP protocol can be registered with type _http._tcp. It is clear that many such services can be registered in a single DNS domain. So a standard DNS query for the HTTP service type could result in a large number of records on which the DNS client will have to apply additional selection criteria to filter out the wanted one(s).

The invention provides in a DNS client, in a server and in a method to put the additional criteria in the DNS query and the DNS client would only receive the relevant records.

Cloud management and automation may also benefit from DNS querying. The operation of an elastic cloud, for instance, requires real-time collection and processing of various types of information reflecting the execution state of the affected services. The ubiquitous nature of DNS infrastructure makes it an interesting candidate to collect and distribute such context information. This can be accomplished using TXT records representing the various operational metrics of a single service instance, such as
example_service_instancel._http._tcp.organisation.o rg TXT "mem_usage=10%"
example_service_instancel._http._tcp.organisation.o rg TXT "cpu_usage=20%"
example_service_instancel._http._tcp.organisation.o rg TXT "avg_response_time=200ms"
...

When an service instance becomes available, its presence is indicated by adding a PTR record linking that instance with the service identifying key.

| | |
|---|---|
| example_service._http._tcp.organisation.org "example_service_instancel._http._tcp.organisation.org" | PTR |
| example_service._http._tcp.organisation.org "example_service_instance2._http._tcp.organisation.org" | PTR |
| example_service._http._tcp.organisation.org "example_service_instance_new._http._tcp.organisation.org" | PTR |
| ... | |

Additional SRV and TXT records give more details about the location and state of that instance. An instance can be taken offline by removing its associated DNS records.

The DNS querying support presented in this invention enables a cloud automation system to query a local DNS server for all systems that are current under load, for instance, without the need to collect and process all TXT and A records (as is required today).

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

A person of skill in the art would readily recognize that steps of various abovedescribed methods can be performed by programmed computers. Herein, some embodiments are also intended to cover program storage devices, e.g., digital data storage media, which are machine or computer readable and encode machineexecutable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Client device connectable to an IP network, the device comprising a DNS request builder comprising a main segment and an auxiliary segment, the main segment being provided for composing a DNS search request comprising a column and a corresponding key, the auxiliary segment being provided for adding to said composed search request a further column and a further corresponding key as auxiliary searching information.

2. Client device according to claim 1, wherein the client device comprises a communication module connectable to the IP network, which module is provided for sending the composed DNS request and for receiving a response to said request from a server.

3. Client device according to any one of the previous claims, wherein the auxiliary segment is provided to use DNS standard extension mechanism, EDNSO, to add the further column and further corresponding key to the composed search request.

4. Server device connectable to an IP network, the device comprising a DNS repository and a processing unit capable of performing a searching operation in the repository based on a search request comprising a column and a corresponding key, wherein the processing unit is provided for extracting a further column and a further corresponding key from the search request, and for performing the searching operation in two stages, a first stage with the column and key and a second stage with the further column and further key.

5. Server device according to the previous claim, wherein the server comprises a database provided for storing the results of the first stage of the searching operation executed on the DNS repository, which database is used as an input for performing the second stage of the searching operation.

6. Server device according to the previous claims, wherein the server device comprises a communication module connectable to the IP network, which module is provided for receiving the search request from a client and which is provided for sending a response to the client.

7. Method for handling a DNS search request from a client, the method comprising:
- Receiving from a client a DNS search request;
- Extracting a column and corresponding key from the DNS search request;
- Extracting a further column and further corresponding key from the DNS search request;
- Searching a DNS repository in two stages, a first stage using the column and corresponding key and a second stage using the further column and further corresponding key; and
- Sending results of the searching to said client.

8. Method for handling a DNS search request according to the previous claim, wherein said searching in two stages comprises:
- Searching the DNS repository using the column and corresponding key and storing results in a database; and
- Searching the database using the further column and further corresponding key to obtain search results.

## Amended claims

### Amended claims in accordance with Rule 137(2) EPC.

**1.** Client device connectable to an IP network, the device comprising a DNS request builder comprising a main segment and an auxiliary segment, the main segment being provided for composing a DNS search request comprising a record type and a corresponding key, the auxiliary segment being provided for adding to said composed search request a further record type and a further corresponding key as auxiliary searching information.

**2.** Client device according to claim 1, wherein the client device comprises a communication module connectable to the IP network, which module is provided for sending the composed DNS request and for receiving a response to said request from a server.

**3.** Client device according to any one of the previous claims, wherein the auxiliary segment is provided to use DNS standard extension mechanism, EDNS0, to add the further record type and further corresponding key to the composed search request.

**4.** Server device connectable to an IP network, the device comprising a DNS repository and a processing unit capable of performing a searching operation in the repository based on a search request received from a client device in the IP network, the request comprising a record type and a corresponding key, wherein the processing unit is provided for extracting a further record type and a further corresponding key from the search request, and for performing the searching operation in two stages, a first stage with the record type and key and a second stage with the further record type and further key.

**5.** Server device according to the previous claim, wherein the server comprises a database provided for storing the results of the first stage of the searching operation executed on the DNS repository, which database is used as an input for performing the second stage of the searching operation.

**6.** Server device according to the previous claims, wherein the server device comprises a communication module connectable to the IP network, which module is provided for receiving the search request from a client and which is provided for sending a response to the client.

**7.** Method for handling a DNS search request from a client, the method comprising:
- Receiving from a client a DNS search request;
- Extracting a record type and corresponding key from the DNS search request;
- Extracting a further record type and further corresponding key from the DNS search request;
- Searching a DNS repository in two stages, a first stage using the record type and corresponding key and a second stage using the further record type and further corresponding key; and
- Sending results of the searching to said client.

**8.** Method for handling a DNS search request according to the previous claim, wherein said searching in two stages comprises:
- Searching the DNS repository using the record type and corresponding key and storing results in a database; and
- Searching the database using the further record type and further corresponding key to obtain search results.
